# EUROPÄISCHE PATENTSCHRIFT

(11) **EP 3 938 241 B1**
(45) Veröffentlichungstag und Bekanntmachung des Hinweises auf die Patenterteilung: **18.01.2023**
(21) Anmeldenummer: 20704008.0
(22) Anmeldetag: 06.02.2020
(51) Int. Cl.: B60N 3/10, B60R 7/04

(54) **ABLAGEFACH MIT EINEM ELASTISCHEN FACHTEILER**
STORAGE COMPARTMENT WITH AN ELASTIC COMPARTMENT DIVIDER
COMPARTIMENT DE RANGEMENT COMPORTANT DES SÉPARATEURS ÉLASTIQUES DE COMPARTIMENT

(30) Priorität: 12.03.2019 DE 102019106311
(43) Veröffentlichungstag der Anmeldung: 19.01.2022
(73) Patentinhaber: Bayerische Motoren Werke Aktiengesellschaft, 80809 München (DE)
(72) Erfinder: SCHMID, Bernhard, 85774 Unterföhring (DE)
(86) Internationale Anmeldenummer: PCT/EP2020/053039
(87) Internationale Veröffentlichungsnummer: WO 2020/182382

(56) Entgegenhaltungen:
- DE-A1-102006 018 895
- DE-A1-102007 006 575
- DE-A1-102009 000 972
- DE-A1-102009 043 768
- DE-A1-102009 043 771

## Beschreibung

Die Erfindung betrifft ein Ablagefach zum Einbau in einem Kraftfahrzeug.

In Kraftfahrzeugen sind - beispielsweise im Bereich der Mittelkonsole - Ablagefächer angeordnet, die zum Aufbewahren von Stiften, Papieren, Brillen, Telefonen und dergleichen verwendet werden.

Wegen der Notwendigkeit einer hohen Bauraumausnutzung sind diese Ablagefächer regelmäßig mit einer ausgeprägten Quer- und/oder Längserstreckung ausgebildet, um auch längliche Gegenstände liegend aufnehmen zu können.

Insbesondere wenn keine separaten Getränkehalter im Kraftfahrzeug vorgesehen sind, werden derartige Ablagefächer von den Fahrzeuginsassen aber auch zum Einstellen von Flaschen, Getränkedosen, Bechern, Gläsern oder dergleichen verwendet. Aufgrund der ausgeprägten Quer- und/oder Längserstreckung der Ablagen ist ein kippsicheres Halten derartiger Getränkebehälter jedoch nicht in jedem Fall sichergestellt.

Dazu schlägt die DE 10 2007 006 575 A1 eine Aufnahme zum kippsicheren Halten von Gegenständen mit unterschiedlichen Grundflächendimensionen vor, wobei die Aufnahme eine Bodenfläche und Seitenwände aufweist, welche zusammen ein Aufnahmefach ausbilden. Zum kippsicheren Halten ist ein an einer Seitenwand schwenkbar gelagerter und mit einer Federkraft beaufschlagter Fachteiler vorgesehen, über den die in dem Aufnahmefach abgestellten Gegenstände an wenigstens eine Seitenwand der Aufnahme gedrückt werden. Diese Lösung erfordert allerdings viele Bauteile und ist umständlich zu montieren.

Die DE 10 2006 018 895 A1 schlägt eine Ablagefach/Becherhalter-Anordnung mit einer gegossenen Basis vor, in die ein Paar elastischer, umkehrbarer Teiler eingesetzt werden kann, die den sicheren Halt unterschiedlich großer Getränkebecher ermöglichen sollen. Die elastischen, umkehrbaren Teiler können eingesetzt und durch eine innere Feder des elastischen Teilers unter Spannung gesetzt werden. Diese Lösung benötigt keine separate Federmechanik. Allerdings ist in den beiden möglichen Stellungen der umkehrbaren Teiler das Ablagefach unterschiedlich - aber dennoch - unterteilt. Eine Ablage größerer Gegenstände in dem Ablagefach wird damit erschwert.

Die DE102009043768 zeigt ein Ablagefach mit einem Ablagevolumen und einen Fachteiler, der das Ablagevolumen unterteilt.

In Fahrzeugen der Anmelderin und in Fahrzeugen von Wettbewerbern werden mittlerweile Ablagefächer verbaut, die wenigstens einen elastischen Fachteiler aufweisen, der, insbesondere mittels einer Bedienkraft, zwischen einer ersten Teilerposition und einer zweiten Teilerposition überführbar ist. Der Fachteiler unterteilt in der ersten Teilerposition das Ablagevolumen in ein erstes Teilfach und ein zweites Teilfach. So kann mittels des Fachteilers das erste, kleinere Teilfach vom größerem Ablagevolumen abgetrennt werden, sodass beispielsweise ein Getränkebehälter kippsicher in dem ersten Teilfach gehalten werden kann. Wenn der Fachteiler in die zweite Teilerposition überführt ist, bildet der Fachteiler an der zweiten Teilerposition einen Teil der Ablagewandung des Ablagevolumens ausbildet, sodass an der zweiten Teilposition das Ablagevolumen insbesondere zumindest im Wesentlichen ungeteilt ist. So steht zumindest im Wesentlichen das gesamte Ablagevolumen zur Ablage größerer Gegenstände bereit, ohne dass der Fachteiler das zur Verfügung stehende Volumen wesentlich verkleinern würde. Allerdings ist es bei diesen Ablagefächern schwierig für den Nutzer, unterschiedlich große Getränkebehälter kippsicher in dem ersten Teilfach zu halten.

Vor diesem Hintergrund ist es eine Aufgabe der Erfindung, ein Ablagefach zum Einbau in einem Kraftfahrzeug zu verbessern.

Diese Aufgabe wird gelöst durch ein Ablagefach mit den Merkmalen von Anspruch 1. Die abhängigen Ansprüche stellen auf vorteilhafte Weiterbildungen der Erfindung ab.

Gemäß einem Aspekt der Erfindung wird ein Ablagefach zum Einbau in einem Kraftfahrzeug, insbesondere in einer (Mittel-)Konsole eines Kraftfahrzeugs, bereitgestellt.

Das Ablagefach weist ein Ablagevolumen auf, welches seitlich durch eine wenigstens teilweise umlaufende Ablagewandung begrenzt ist. Insbesondere ist das Ablagevolumen oben (sprich an seiner vertikal oben angeordneten Begrenzung) durch eine Ablageöffnung und ggf. Vorsprünge einer Abdeckung der Konsole begrenzt, wobei die Ablageöffnung beispielsweise durch eine geeignet ausgestaltete Öffnung in einer Abdeckung des Ablagefachs ausgebildet sein kann und/oder durch die (jeweiligen) obere(n) Kante(n) der Ablagewandung. Das Ablagevolumen kann zudem gegebenenfalls unten (sprich an seiner horizontal unten angeordneten Begrenzung) zumindest teilweise durch einen Ablageboden begrenzt sein.

Zudem weist das Ablagefach wenigstens einen elastischen Fachteiler auf, der zumindest in einem mittigen Bereich einer Längserstreckung des Fachteilers ein makroskopisch elastisches Material aufweist, sodass der Fachteiler zwischen einer ersten Teilerposition und einer zweiten Teilerposition überführbar ist, und der an der ersten Teilerposition das Ablagevolumen in ein erstes Teilfach und ein zweites Teilfach unterteilt, und an der zweiten Teilerposition einen Teil der Ablagewandung des Ablagevolumens ausbildet.

Darüber hinaus weist das Ablagefach zwei voneinander beabstandete Teileraufnahmen, welche an der Ablagewandung angeordnet sind und an denen jeweils eines von zwei Längsenden des Fachteilers aufgenommen ist, wobei der Fachteiler an jeder der Teileraufnahmen drehbar um eine zu einer Verbindungsachse zwischen den Teileraufnahmen senkrechte Teiler-Drehachse gelagert ist.

An jeder der Teileraufnahmen ist eine Positioniereinrichtung angeordnet, die dazu eingerichtet ist, den Fachteiler mittels einer Positionierkraft in die zweite Teilerposition zu überführen, insbesondere ausgehend von der ersten Teilerposition oder einer anderen, zwischen der ersten und der zweiten Teilerposition liegenden Teilerposition, und/oder den Fachteiler an der zweiten Teilerposition zu halten.

Der Erfindung liegt unter anderem die Überlegung zugrunde, mit einer möglichst einfachen Mechanik ein Ablagefach zu gestalten, das sowohl ein möglichst großes maximales Ablagevolumen bereitstellt als auch einen geeigneten Cupholder für verschieden große Getränkebehälter wie beispielsweise einer Dose für einen Energy Drink einerseits (z.B. 250ml) und einer großen Wasserflasche (z.B. 1,5 I) andererseits.

Die Erfindung basiert nun unter anderem auf der Idee, sich die Eigenschaften eines länglichen, zwischen zwei Führungspunkten eingespannten elastischen Bauteils derart zu Nutze zu machen, dass die Ruhelage einerseits des Totpunktes eine Abteilung eines Cupholders innerhalb des Ablagevolumens ermöglicht, während die Ruhelage andererseits des Totpunktes außerhalb bzw. am Rand des Ablagevolumens angeordnet ist.

Die zur Überführung des Fachteiler zwischen der ersten Teilerposition der zweiten Teilerposition oder umgekehrt benötigte Bedienkraft kann durch einen Benutzer gemäß einer Ausführung händisch - beispielsweise an einer Bedienlasche - aufgebracht werden. Gemäß einer anderen Ausführung kann auch eine elektromotorische Überführung vorgesehen sein, die dann durch den Benutzer geeignet ausgelöst werden kann.

Zudem basiert die Erfindung unter anderem auf der Idee, durch eine vorgegebene Positionierkraft hin zu der zweiten Teilerposition die durch den Fachteiler abgetrennte Grundfläche zunächst so weit aufzuspannen, dass der Getränkebehälter eingeführt werden kann. Anschließend wird die Grundfläche durch die vorgegebene Positionierkraft, so weit verkleinert, dass der Fachteiler an der Getränkebehälter anliegt. Mehr noch: durch die vorgegebene Positionierkraft kann gegebenenfalls der Getränkebehälter gegen die Ablagewandung gedrückt und somit kippsicher gehalten werden.

Um eine möglichst robuste und dabei insbesondere auch preisgünstige und einfache Lösung für die Positioniereinrichtung bereitzustellen, weist gemäß einer Ausführung die Positioniereinrichtung eine Feder auf, die derart vorgespannt ist, dass sie den Fachteiler mittels einer Federkraft in die zweite Teilerposition überführen kann und/oder den Fachteiler an der zweiten Teilerposition halten kann. Insbesondere wirkt die Federkraft also derart, dass ein von der Ablagewandung ausgelenkter Fachteiler mittels der Federkraft wieder zurück an die Ablagewandung gedrückt bzw. gezogen und - einmal dort angekommen - gehalten wird.

Gemäß einer Ausführung weist der Fachteiler einen mittigen, elastischen Bereich und bezüglich der Längserstreckung des Fachteilers beiderseits seitlich dieses mittigen Bereichs jeweils einen Aufnahmebereich auf. An dem Längsende des jeweiligen Aufnahmebereichs, also insbesondere bezüglich der Längserstreckung des Fachteilers, ist der Fachteiler jeweils in einer der Teileraufnahmen aufgenommen. Gemäß einer Ausführung sind dabei die Aufnahmebereiche makroskopisch starr ausgebildet. Dadurch wird ein "umfassen" bzw. "anschmiegen" des mittigen Bereichs an einen aufgenommenen Getränkebehälter erleichtert - und damit eine Berührfläche zwischen dem Getränkebehälter und dem Fachteiler vergrößert. So kann bei unterschiedlichen Behälterdurchmessern eine bessere Kippsicherung erreicht werden, weil die Positionierkraft wirkt.

Gemäß einer Ausführung ist zwischen dem mittigen Bereich und jedem der Aufnahmebereiche des Fachteilers jeweils eine Knickachse vorgesehen, die insbesondere parallel zu den Teiler-Drehachsen ausgerichtet ist. Insbesondere kann eine solche Knickachse mittels eines niedrigeren Materialquerschnitts als die umgebenden Bereiche und/oder mittels jeweils eines Drehgelenks ausgebildet sein, welches an der Knickachse angeordnet ist. Damit kann das "umfassen" bzw. "anschmiegen" des mittigen Bereichs an einen aufgenommenen Getränkebehälter zusätzlich erleichtert werden.

Gemäß einer Ausführung ist durch eine Auslenkung des mittigen Bereichs um die Knickachsen der Fachteiler aus der zweiten Teilerposition in eine dritte Teilerposition überführbar, in welcher der mittige Bereich das Ablagevolumen in ein drittes Teilfach und ein viertes Teilfach unterteilt, wobei insbesondere das dritte Teilfach größer ist als das erste Teilfach und das vierte Teilfach kleiner als das zweite Teilfach. Mit anderen Worten: wenn der Fachteiler zunächst an der Ablagewandung anliegt (entspricht der zweiten Teilerposition), kann der mittige Bereich von der Ablagewandung weg ausgelenkt werden, während die Aufnahmebereiche an der Ablagewandung anliegen bleiben, weil weiterhin die Positionierkraft wirkt. Die Auslenkung erfolgt dementsprechend um die Knickachsen des Fachteilers zunächst in die dritte Teilerposition. Anschließend kann der Fachteiler mittels einer Bedienkraft des Nutzers in die erste Teilerposition überführt werden, wobei zum Auslenken der Aufnahmebereiche die Positionierkraft überwunden werden muss.

Gemäß einer Ausführung ist in die "andere Richtung" durch eine Auslenkung der Aufnahmebereiche um die Knickachsen der Fachteiler aus der ersten Teilerposition in die dritte Teilerposition überführbar. Denn hier wirkt die Positionierkraft der vollständigen Auslenkung der Aufnahmebereiche um die Teiler-Drehachse entgegen. Die Aufnahmeelemente werden wieder an die Ablagewandung heran gezogen bzw. gedrückt. Der mittige Bereich des Fachteilers verbleibt zunächst in der dritten Teilerposition kann anschließend mittels einer Bedienkraft des Nutzers in die zweite Teilerposition überführt werden.

Gemäß unterschiedlichen Ausführungen kann der Fachteiler eine größere oder kleinere Vertikalerstreckung (entspricht insbesondere der Erstreckung entlang einer Teiler-Drehachse) aufweisen. So kann der Fachteiler beispielsweise einen, insbesondere horizontal verlaufenden, runden oder ovalen Querschnitt aufweisen. In einem anderen Ausführungsbeispiel kann der Fachteiler die Gestalt einer dünnen Wandung aufweisen.

Jedenfalls weist der Fachteiler ein makroskopisch elastisches Material auf, insbesondere einen elastischen Polymer- und/oder Metallwerkstoff, der insbesondere dazu geeignet ist, in einem Kraftfahrzeuginnenraum verbaut zu werden.

Gemäß einer Ausführung resultiert die Elastizität des Fachteilers zumindest im Wesentlichen aus der Verwendung eines makroskopisch elastischen Materials, insbesondere eines Polymerwerkstoffs (z.B. ein geeignetes Elastomer) und/oder eines Metallwerkstoffs (z.B. ein flaches Federstahlband wie bei bekannten, haushaltsüblichen Maßbändern), an zumindest einem Teil der Längserstreckung oder der gesamten Längserstreckung des Fachteilers, sodass auf diese Weise der Fachteiler zwischen der ersten Teilerposition und der zweiten Teilerposition überführt werden kann. Insbesondere ist das elastische Polymer zumindest in einem mittigen Bereich der Längserstreckung des Fachteilers angeordnet.

Um den zu haltenden Behälter in seiner Position fest und klapperfrei zu halten, sind gemäß einer Ausführung in einem Bereich, in welchem der Fachteiler das makroskopisch elastische Material aufweist, wenigstens ein, insbesondere mehrere, Vorsprünge, insbesondere Noppen und/oder Polster, auf einer dem zu haltenden Behälter zugewandten Seite angeordnet.

Um den Totpunkt der Überführung des Fachteilers zwischen der ersten Teilerposition und der zweiten Teilerposition zu definieren, sind gemäß einer Ausführung an der Ablagewandung zwei voneinander beabstandete Teileraufnahmen angeordnet, an denen jeweils eines von zwei Längsenden des Fachteilers aufgenommen ist.

Insbesondere kann durch die Positionierung der Teileraufnahmen auch sichergestellt werden, dass der Fachteiler in der zweiten Teilerposition einen Teil der Ablagewandung ausbildet. Insbesondere können auch die Teileraufnahmen einen Teil der Ablagewandung ausbilden.

Beispielsweise kann eine Teileraufnahme ein Drehscharnier aufweisen, dessen Drehachse entlang einer Teiler-Drehachse verläuft. Gemäß einer Ausführung ist dazu der Fachteiler an jeder der Teileraufnahmen drehbar um eine zu einer Verbindungsachse zwischen den Teileraufnahmen, insbesondere die Totpunktachse, senkrechte Teiler-Drehachse gelagert.

Gemäß einer Ausführung verläuft die Teiler-Drehachse zumindest im Wesentlichen parallel zu einer Erstreckungsebene der Ablagewandung, um eine einfache Überführung des Fachteilers zwischen der ersten und der zweiten Teilerposition zu unterstützen.

Insbesondere, damit runde Getränkebehälter kippsicher gehalten werden können, weist gemäß einer Ausführung der durch den Fachteiler ausgebildete Teil der Ablagewandung eine zumindest im Wesentlichen konstante Krümmung auf, sodass dieser Teil der Ablagewandung einen zumindest im Wesentlichen konstanten Radius aufweist.

Um die Kippsicherung weiter zu verbessern, sind gemäß einer Ausführung der Fachteiler an der ersten Teilerposition und die Ablagewandung im Bereich des nicht an der zweiten Teilerposition angeordneten Fachteilers zumindest in einem Teilbereich symmetrisch bezüglich einer Verbindungsachse zwischen den Teileraufnahmen angeordnet. Insbesondere beschreibt dabei der symmetrische Teilbereich einen Teilkreis und/oder eine Teilellipse um einen Punkt auf der Verbindungsachse.

Um verschieden geformte Gegenstände im Ablagefach aufnehmen zu können, insbesondere um beispielsweise runde und eckige Getränkebehälter aufnehmen zu können, weist gemäß einer Ausführung das Ablagefach jenseits des Fachteilers eine prismatische, insbesondere eine rechteckige, Grundform auf und/oder ist der Fachteiler an einer Ecke der Grundform angeordnet.

Um zumindest zwei Getränkebehälter in dem Ablagefach aufnehmen zu können, sind gemäß einer Ausführung zwei voneinander beabstandete Fachteiler vorgesehen. Insbesondere sind die beiden Fachteiler spiegelbildlich bezüglich einer Mittenlängsachse des Ablagefachs ausgebildet. So eignet sich das Ablagefach beispielsweise zum Einbau in eine Mittelkonsole eines Kraftfahrzeuges, wobei dann beispielsweise einem Fahrersitzplatz unter dem Beifahrersitzplatz jeweils ein Fachteiler zugeordnet sein kann.

Weitere Vorteile und Anwendungsmöglichkeiten der Erfindung ergeben sich aus der nachfolgenden Beschreibung im Zusammenhang mit den Figuren.
- Fig. 1: zeigt eine perspektivische Schrägansicht eines Ablagefachs mit zwei Fachteilern nach einer beispielhaften Ausführung der Erfindung in einem ersten Betriebszustand.
- Fig. 2: zeigt eine Draufsicht des Ablagefachs aus Fig. 1 in dem ersten Betriebszustand (Fig. 2a) sowie in einem zweiten Betriebszustand (Fig. 2b) und in einem dritten Betriebszustand (Fig. 3c).
- Fig. 3a: zeigt eine Schrägansicht eines Ablagefachs mit zwei Fachteilern nach einer weiteren beispielhaften Ausführung der Erfindung in einem ersten Betriebszustand.
- Fig. 3b: zeigt das Ablagefach aus Fig. 3a in einem zweiten Betriebszustand.

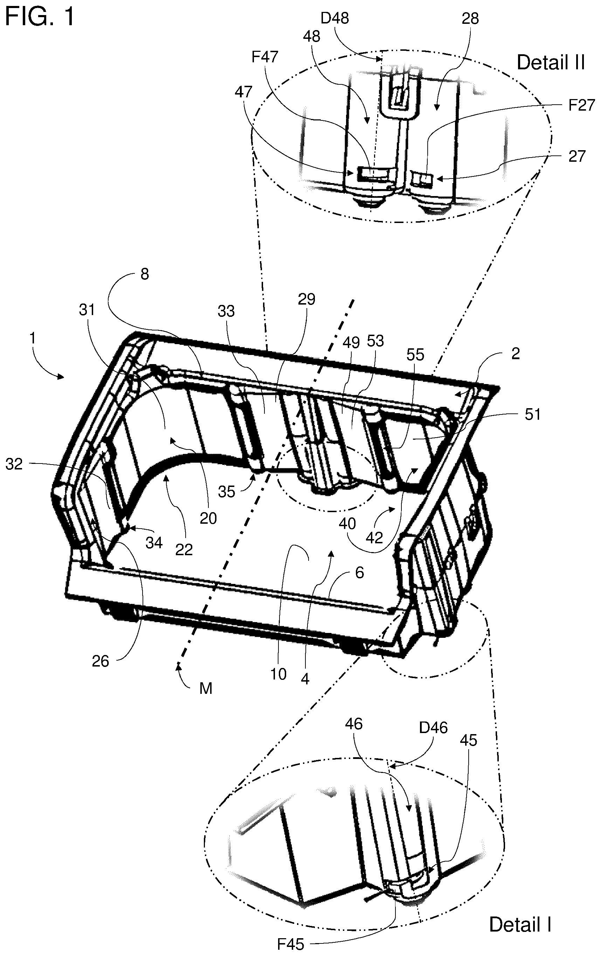

Fig. 1 zeigt ein Ablagefach 1, welches in einer Konsole 2 eines ansonsten nicht dargestellten Kraftfahrzeugs verbaut ist. Die Konsole ist im Ausführungsbeispiel eine Mittelkonsole zwischen einem Fahrersitzplatz und einem Beifahrersitzplatz.

Das Ablagefach 1 weist ein Ablagevolumen 4 auf, welches seitlich durch eine Ablagewandung 6 begrenzt ist. Zum restlichen Fahrzeuginnenraum hin (also zumindest im Wesentlichen nach oben hin) ist das Ablagevolumen 4 durch eine Ablageöffnung 8 begrenzt. Die Begrenzung der Ablageöffnung 8 ist im Ausführungsbeispiel in Teilbereichen der Ablagewandung 6 als obere Kante dieser Ablagewandung ausgebildet, in anderen Teilbereichen durch Vorsprünge einer Konsolenabdeckung, welche in eine senkrechte Projektion der Ablagewandung 6 eingreifen.

Die Ablageöffnung 8 weist dabei eine rechteckige Grundform auf, wobei an den hinteren beiden Ecken des Rechtecks jeweils teilkreisförmige Abrundungen angeordnet sind.

Im Bereich der teilkreisförmigen Abrundungen weist das Ablagefach 1 zwei elastische Fachteiler 20 und 40 auf, die voneinander spiegelbildlich bezüglich einer Mittenlängsachse M des Ablagefachs 1 bzw. des Ablagevolumens 4 beabstandet sind. Das Ablagefach 1 ist somit symmetrisch bezüglich der Mittenlängsachse M ausgebildet.

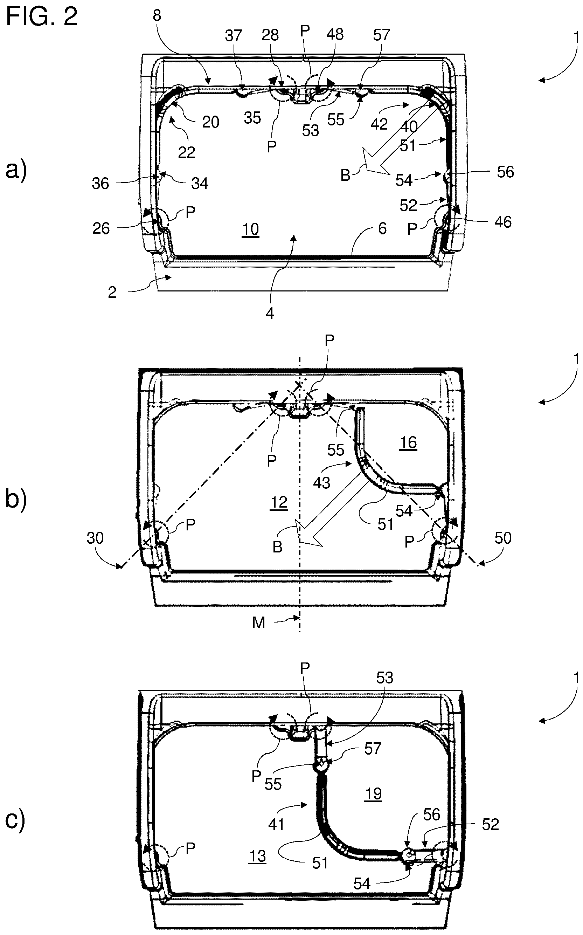

In der Darstellung der Fig. 1 sind beide Fachteiler 20 und 40 jeweils an einer zweiten Teilerposition 22 bzw. 42 und damit an der Begrenzung des Ablagevolumens 4 angeordnet. Der Fachteiler 20 bildet einen Teil 29 der Ablagewandung 6 aus; der Fachteiler 40 einen Teil 49 (in Fig. 1 nicht dargestellt, siehe Fig. 2) der Ablagewandung 6.

Die Fachteiler 20, 40 weisen jeweils einen mittigen Bereich 31, 51 auf, in welchem der Fachteiler 20, 40 ein makroskopisch elastisches Material aufweist. Bezüglich seiner Längserstreckung weist jeder der Fachteiler 20, 40 beiderseits seitlich des mittigen Bereichs 31, 51 jeweils einen Aufnahmebereich 32 und 33 bzw. 52 und 53 auf. Die Aufnahmebereiche 32, 33, 52, 53 sind im Ausführungsbeispiel makroskopisch starr ausgebildet.

Das Ablagefach 1 weist für jeden Fachteiler 20, 40 zwei voneinander beabstandete Teileraufnahmen 26 und 28 bzw. 46 und 48, welche an der Ablagewandung 6 angeordnet sind und an denen jeweils eines von zwei Längsenden des Fachteilers 20, 40 aufgenommen ist. Der jeweilige Fachteiler 20 bzw. 40 ist an den zugeordneten Teileraufnahmen 26 und 28 bzw. 46 und 48 drehbar um eine zu einer Verbindungsachse zwischen den Teileraufnahmen senkrechte Teiler-Drehachse D gelagert.

Wie insbesondere den Details I und II in Fig. 1 (Detail II zeigt den markierten Abschnitt von hinten, also von der in Fig. 1 an sich nicht sichtbaren Seite) zu entnehmen ist, ist an jeder der Teileraufnahmen 26, 28, 46, 48 jeweils eine Positioniereinrichtung 25, 27, 45, 47 angeordnet, die dazu eingerichtet ist, den jeweiligen Fachteiler 20, 40 mittels einer Positionierkraft P in die zweite Teilerposition 22, 42 zu überführen oder in dieser Position zu halten. Im Ausführungsbeispiel weist die Positioniereinrichtung jeweils eine Feder F25, F27, F45, F47 auf, die derart vorgespannt ist, dass sie den Fachteiler 20 bzw. 40 mittels einer Federkraft in die zweite Teilerposition überführen oder ihn dort halten kann. Insbesondere wirkt die Federkraft also derart, dass ein von der Ablagewandung 6 ausgelenkter Fachteiler 20, 40 mittels der zugeordneten Federn F25, F27 bzw. F45, F47 wieder zurück an die Ablagewandung 6 gedrückt bzw. gezogen und dort angekommen gehalten wird.

Zwischen dem mittigen Bereich 31, 51 und jedem der Aufnahmebereiche 32 und 33 bzw. 52 und 53 des Fachteilers 20, 40 ist jeweils eine Knickachse 34, 35 bzw. 54, 55 vorgesehen, die insbesondere parallel zu den Teiler-Drehachsen D ausgerichtet ist. Im Ausführungsbeispiel sind die Knickachsen 34, 35 bzw. 54, 55 jeweils mittels Drehgelenken 36, 37 bzw. 56, 57 ausgebildet, welche an der jeweiligen Knickachse angeordnet sind.

Fig. 2 erläutert zu dem Ablagefach 1 der Fig. 1, wie die beiden Fachteiler 20 und 40 zwischen der zweiten Teilerposition 22 bzw. 42 und einer ersten Teilerposition 41 und einer dritten Teilerposition 23 bzw. 43 überführt werden können.

Der Fachteiler 20 ist an zwei Teileraufnahmen 26 und 28 aufgenommen und gelagert, an welchen er jeweils drehbar um eine Längsachse der Teileraufnahmen gelagert ist. Der Fachteiler 40 ist an zwei Teileraufnahmen 46 und 48 aufgenommen und gelagert, an welchen er jeweils drehbar um eine Längsachse der Teileraufnahmen gelagert ist.

Beide Fachteiler 20 und 40 sind in Fig. 2a an der zweiten Teilerposition 22 bzw. 42 angeordnet, in welcher sie das Ablagevolumen 4 nicht in ein erstes Teilfach 12 und ein jeweiliges weiteres Teilfachunterteilen. Vielmehr liegen die beiden Fachteiler 20 und 40 an der Ablagewandung 6 an.

Im Ausführungsbeispiel ist durch eine Auslenkung des mittigen Bereichs 31, 51 um die Knickachsen 34, 35 bzw. 54, 55 der Fachteiler 20, 40 aus der zweiten Teilerposition 22, 42 in eine dritte Teilerposition 23, 43 überführbar, in welcher der mittige Bereich 31, 51 das Ablagevolumen in ein drittes Teilfach 19 und ein viertes Teilfach 13 unterteilt.

Wie in Fig. 2a dargestellt, liegt also der Fachteiler 40 zunächst an der Ablagewandung 6 an, was der zweiten Teilerposition 42 entspricht.

Davon ausgehend kann der mittige Bereich 51 von der Ablagewandung 6 weg mittels einer Bedienkraft B eines Nutzers elastisch verformt und dadurch ausgelenkt werden, während die Aufnahmebereiche 52, 53 an der Ablagewandung 6 anliegen bleiben, weil weiterhin die Positionierkraft P wirkt. Die Auslenkung erfolgt dementsprechend um die Knickachsen 54 und 55 des Fachteilers 40 zunächst in die dritte Teilerposition 43. Das Ergebnis ist in Fig. 2b dargestellt.

Anschließend kann der Fachteiler mittels einer weiteren Bedienkraft B des Nutzers in die erste Teilerposition 41 überführt werden, wobei zum Auslenken der Aufnahmebereiche 52 und 53 die Positionierkraft P überwunden werden muss. Das Ergebnis ist in Fig. 2c dargestellt.

In die "andere Richtung" ist durch eine Auslenkung der Aufnahmebereiche 52, 53 um die Knickachsen 54, 54 der Fachteiler 40 aus der ersten Teilerposition 41 in die dritte Teilerposition 43 überführbar. Beispielsweise kann nach einem Entfernen eines eingestellten Getränkebehälters aus dem zweiten Teilfach 16 diese Überführung in die dritte Teilerposition 43 ohne Zutun des Nutzers allein mittels der Positionierkraft P erfolgen. Denn die Positionierkraft P wirkt der vollständigen Auslenkung der Aufnahmebereiche 52 und 53 um die Teiler-Drehachsen D entgegen. Die Aufnahmebereiche werden wieder an die Ablagewandung 6 heran gezogen bzw. gedrückt. Der mittige Bereich 51 des Fachteilers 40 verbleibt zunächst in der dritten Teilerposition 43 kann anschließend mittels einer Bedienkraft B des Nutzers in die zweite Teilerposition 42 überführt werden.

Um den Fachteiler 40 in die erste Teilerposition 41 zu überführen, wurde - beispielsweise durch den Beifahrer - eine Kraft B an einer Bedienlasche 58 aufgebracht, um den Fachteiler 40 über den Totpunkt der elastischen Verformung (vergleiche Totachse = Verbindungsachse 50 zwischen den Teileraufnahmen 46 und 48) zu bewegen. Dazu ist eine elastische Verformung des Fachteilers 40 vorgesehen. Nach Erreichen des Totpunktes erfolgt von selbst eine elastische Verformung des Fachteilers 40 hin zu der in Fig. 2b dargestellten Position.

Analog gilt das auch für den ersten Fachteiler 20, der in den Darstellungen der Figuren 2a-c allerdings jeweils an der zweiten Teilerposition 22 angeordnet ist.

Die Teileraufnahmen 26 und 28 bzw. 46 und 48 sind jeweils mit einem Drehlager ausgebildet.

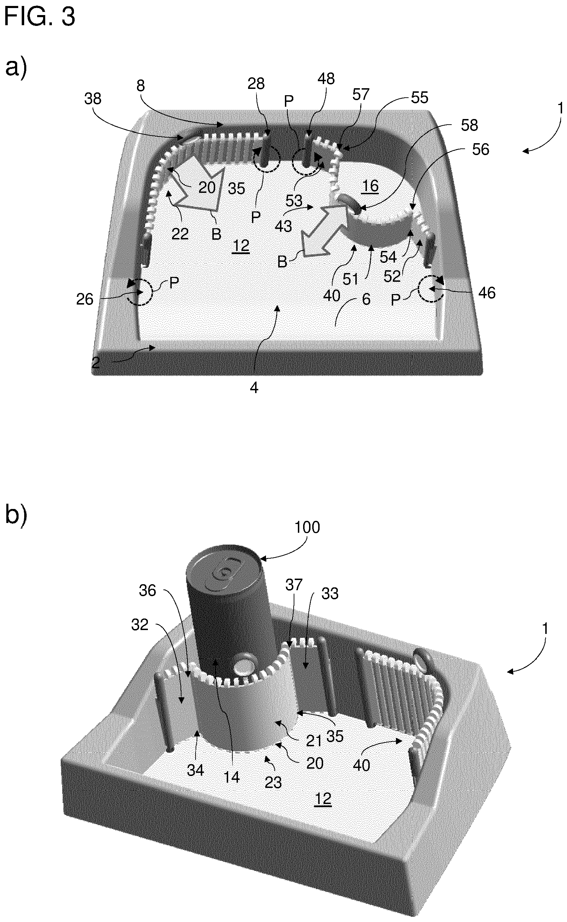

In den Figuren 3a und b ist jeweils das gleiche Ablagefach 1, das im Wesentlichen ähnlich dem Ablagefach der Figuren 1 und 2 ausgebildet ist, in einer schematischen Schrägansicht dargestellt.

In der Fig. 3a ist der erste Fachteiler 20 an der zweiten Teilerposition 22 dargestellt. Der Pfeil zeigt hier die Richtung der benötigten Bedienkraft B an, um den Fachteiler 20 in die dritte Teilerposition 23 zu überführen.

Der zweite Fachteiler 40 ist an der dritten Teilerposition 43 dargestellt. Der Doppelpfeil zeigt hier die Möglichkeit, einerseits mittels einer Bedienkraft das Fachteiler 40 in die erste Teilerposition 41 zu überführen. Andererseits von dort ausgehend mittels der Positionierungskraft P den Fachteiler 40 wieder zurück in die dritte Teilerposition 43 zu überführen.

In der Fig. 3b ist in dem zweiten Teilfach 14 eine kleine Getränkedose 100 mit einem runden Querschnitt angeordnet. Die Getränkedose 100 ist dadurch gegen ein Verkippen geschützt, dass der Fachteiler 20 in der dritten Teilerposition 23 angeordnet ist. Die Positionierkraft P der Positioniereinrichtungen 25, 27 wird mittels der Federn F25 und F27 auf die Aufnahmebereiche 32 und 33 aufgebracht, sodass diese vermittelt über die Drehgelenke 36 und 37 den makroelastischen Bereich 31 des Fachteilers 20 eng an eine Mantelfläche der Getränkedose 100 pressen. Dadurch wird die Dose 100 zusätzlich gegen die Aufnahmewandung 6 gedrückt, sodass die Dose 100 kippsicher gehalten ist.

### BEZUGSZEICHENLISTE

- 1: Ablagefach
- 2: Konsole
- 4: Ablagevolumen
- 6: Ablagewandung
- 8: Ablageöffnung
- 10: Ablageboden
- 12: erstes Teilfach
- 13: viertes Teilfach
- 14, 16: zweites Teilfach
- 19: drittes Teilfach
- 20, 40: elastische Fachteiler
- 41: erste Teilerposition
- 22, 42: zweite Teilerposition
- 23, 43: dritte Teilerposition
- 29, 49: Teil der Ablagewandung
- 26, 28, 46, 48: Teileraufnahmen
- 25, 27, 45, 47: Positioniereinrichtung, hier Positionierfeder
- 30, 50: Verbindungsachse
- 31, 51: mittiger Bereich
- 32, 33, 52, 53: Aufnahmebereiche
- 34, 35, 54, 55: Knickachse
- 36, 37, 56, 57: Drehgelenk
- 38, 58: Bedienlasche

- 100: Getränkedose

- D: Teiler-Drehachse
- B: Bedienkraft
- M: Mittenlängsachse des Ablagefachs
- P: Positionierkraft, hier Federkraft

## Patentansprüche

1. **Ablagefach** (1) zum Einbau in einem Kraftfahrzeug, aufweisend:
- ein Ablagevolumen (4), welches seitlich durch eine wenigstens teilweise umlaufende Ablagewandung (6) begrenzt ist,
- wenigstens einen elastischen Fachteiler (20, 40), der zumindest in einem mittigen Bereich (31, 51) einer Längserstreckung des Fachteilers (20, 40) ein makroskopisch elastisches Material aufweist, sodass der Fachteiler zwischen einer ersten Teilerposition (41) und einer zweiten Teilerposition (22, 42) überführbar ist, und der an der ersten Teilerposition das Ablagevolumen in ein erstes Teilfach (12) und ein zweites Teilfach (14, 16) unterteilt und an der zweiten Teilerposition einen Teil (29, 49) der Ablagewandung (6) des Ablagevolumens ausbildet,
- zwei voneinander beabstandete Teileraufnahmen (26, 28; 46, 48), welche an der Ablagewandung angeordnet sind und an denen jeweils eines von zwei Längsenden des Fachteilers aufgenommen ist, wobei der Fachteiler an jeder der Teileraufnahmen drehbar um eine zu einer Verbindungsachse (30, 50) zwischen den Teileraufnahmen senkrechte Teiler-Drehachse (D) gelagert ist, **dadurch gekennzeichnet, dass**
an jeder der Teileraufnahmen eine Positioniereinrichtung (25, 27, 45, 47) angeordnet ist, die dazu eingerichtet ist, den Fachteiler mittels einer Positionierkraft (P) in die zweite Teilerposition zu überführen und/oder den Fachteiler an der zweiten Teilerposition zu halten.

2. Ablagefach gemäß Anspruch 1, **dadurch gekennzeichnet, dass** die Positioniereinrichtung eine Feder (F25, F27, F45, F47) aufweist, die derart vorgespannt ist, dass sie den Fachteiler mittels einer Federkraft (P) in die zweite Teilerposition überführen und/oder den Fachteiler an der zweiten Teilerposition halten kann.

3. Ablagefach gemäß einem der vorherigen Ansprüche, **dadurch gekennzeichnet, dass** der Fachteiler beiderseits seitlich des mittigen Bereichs jeweils einen Aufnahmebereich (32, 33, 52, 53) aufweist, an dessen Längsende der Fachteiler jeweils in einer der Teileraufnahmen aufgenommen ist.

4. Ablagefach gemäß Anspruch 3, **dadurch gekennzeichnet, dass** die Aufnahmebereiche makroskopisch starr ausgebildet sind.

5. Ablagefach gemäß Anspruch 3 oder 4, **dadurch gekennzeichnet, dass** zwischen dem mittigen Bereich und jedem der Aufnahmebereiche des Fachteilers jeweils eine Knickachse (34, 35, 54, 55) vorgesehen ist.

6. Ablagefach gemäß Anspruch 5, **dadurch gekennzeichnet, dass** an der Knickachse jeweils ein Drehgelenk (36, 37, 56, 57) angeordnet ist.

7. Ablagefach gemäß Anspruch 5 oder 6, **dadurch gekennzeichnet, dass** durch eine Auslenkung des mittigen Bereichs um die Knickachsen der Fachteiler aus der zweiten Teilerposition in eine dritte Teilerposition (23, 43) überführbar ist, in welcher der mittige Bereich das Ablagevolumen in ein drittes Teilfach (19) und ein viertes Teilfach (13) unterteilt.

8. Ablagefach gemäß einem der Ansprüche 5 bis 7, **dadurch gekennzeichnet, dass** durch eine Auslenkung der Aufnahmebereiche um die Knickachsen der Fachteiler aus der ersten Teilerposition in die dritte Teilerposition überführbar ist.

9. Ablagefach gemäß einem der vorhergehenden Ansprüche, **dadurch gekennzeichnet, dass** der durch den Fachteiler ausgebildete Teil (29, 49) der Ablagewandung eine zumindest im Wesentlichen konstante Krümmung aufweist, sodass dieser Teil der Ablagewandung einen zumindest im Wesentlichen konstanten Radius aufweist.

10. Ablagefach gemäß einem der vorhergehenden Ansprüche, **dadurch gekennzeichnet, dass** das Ablagefach jenseits des Fachteilers eine prismatische, insbesondere eine rechteckige, Grundform aufweist und der Fachteiler an einer Ecke der Grundform angeordnet ist.

11. Ablagefach gemäß einem der vorhergehenden Ansprüche, **dadurch gekennzeichnet, dass** zwei voneinander beabstandete Fachteiler (20, 40) vorgesehen sind.

12. Ablagefach gemäß Anspruch 11, **dadurch gekennzeichnet, dass** die beiden Fachteiler spiegelbildlich bezüglich einer Mittenlängsachse (M) des Ablagefachs ausgebildet sind.

13. Ablagefach gemäß einem der vorhergehenden Ansprüche, **dadurch gekennzeichnet, dass** in einem Bereich, in welchem der Fachteiler (20, 40) das makroskopisch elastische Material aufweist, wenigstens ein Vorsprung auf einer dem zu haltenden Behälter zugewandten Seite angeordnet ist.

## Claims

1. **Storage compartment** (1) for installation in a motor vehicle, having:
- a storage volume (4), which is laterally delimited by an at least partially peripheral storage wall (6),
- at least one elastic compartment divider (20, 40), which comprises a macroscopically elastic material at least in a central region (31, 51) of a longitudinal extent of the compartment divider (20, 40), with the result that the compartment divider can be transferred between a first divider position (41) and a second divider position (22, 42), and which at the first divider position subdivides the storage volume into a first subcompartment (12) and a second subcompartment (14, 16), and at the second divider position forms a part (29, 49) of the storage wall (6) of the storage volume,
- two divider receptacles (26, 28; 46, 48), which are spaced apart from one another, are arranged on the storage wall and on which a respective one of two longitudinal ends of the compartment divider is received, wherein the compartment divider on each of the divider receptacles is mounted rotatably about a divider axis of rotation (D) which is perpendicular to a connecting axis (30, 50) between the divider receptacles,
**characterized in that**
arranged on each of the divider receptacles is a positioning device (25, 27, 45, 47), which is configured to transfer the compartment divider into the second divider position by means of a positioning force (P), and/or to retain the compartment divider at the second divider position.

2. Storage compartment according to Claim 1, **characterized in that** the positioning device has a spring (F25, F27, F45, F47), which is pretensioned in such a way that it can transfer the compartment divider into the second divider position by means of a spring force (P) and/or can retain the compartment divider at the second divider position.

3. Storage compartment according to either of the preceding claims, **characterized in that** the compartment divider has a respective receiving region (32, 33, 52, 53) laterally on either side of the central region, on the longitudinal end of which receiving region the compartment divider is received respectively in one of the divider receptacles.

4. Storage compartment according to Claim 3, **characterized in that** the receiving regions have a macroscopically rigid form.

5. Storage compartment according to Claim 3 or 4, **characterized in that** a respective bending axis (34, 35, 54, 55) is provided between the central region and each of the receiving regions of the compartment divider.

6. Storage compartment according to Claim 5, **characterized in that** a respective rotary joint (36, 37, 56, 57) is arranged on the bending axis.

7. Storage compartment according to Claim 5 or 6, **characterized in that,** as a result of a deflection of the central region about the bending axes, the compartment divider can be transferred from the second divider position into a third divider position (23, 43), in which the central region subdivides the storage volume into a third subcompartment (19) and a fourth subcompartment (13) .

8. Storage compartment according to one of Claims 5 to 7, **characterized in that,** as a result of a deflection of the receiving regions about the bending axes, the compartment divider can be transferred from the first divider position into the third divider position.

9. Storage compartment according to one of the preceding claims, **characterized in that** that part (29, 49) of the storage wall which is formed by the compartment divider has an at least substantially constant curvature, such that this part of the storage wall has an at least substantially constant radius.

10. Storage compartment according to one of the preceding claims, **characterized in that** the storage compartment on the far side of the compartment divider has a prismatic, in particular a rectangular, basic shape and the compartment divider is arranged on one corner of the basic shape.

11. Storage compartment according to one of the preceding claims, **characterized in that** two compartment dividers (20, 40) which are spaced apart from one another are provided.

12. Storage compartment according to Claim 11, **characterized in that** the two compartment dividers are formed mirror-symmetrically with respect to a center longitudinal axis (M) of the storage compartment.

13. Storage compartment according to one of the preceding claims, **characterized in that** at least one protrusion is arranged in a region in which the compartment divider (20, 40) comprises the macroscopically elastic material and on a side facing the container to be retained.

## Revendications

1. **Compartiment de rangement** (1) pour l'installation dans un véhicule automobile, présentant :
- un volume de rangement (4) qui est délimité latéralement par une paroi de rangement (6) au moins partiellement périphérique,
- au moins un séparateur de compartiment élastique (20, 40) qui présente un matériau macroscopiquement élastique au moins dans une zone centrale (31, 51) d'une extension longitudinale du séparateur de compartiment (20, 40), de telle sorte que le séparateur de compartiment peut être transféré entre une première position de séparateur (41) et une deuxième position de séparateur (22, 42), et qui, dans la première position de séparateur, sépare le volume de rangement en un premier compartiment partiel (12) et un deuxième compartiment partiel (14, 16) et, dans la deuxième position de séparateur, forme une partie (29, 49) de la paroi de rangement (6) du volume de rangement,
- deux logements de séparateur (26, 28 ; 46, 48) espacés l'un de l'autre, qui sont agencés sur la paroi de rangement et sur chacun desquels est logée l'une de deux extrémités longitudinales du séparateur de compartiment, le séparateur de compartiment étant monté sur chacun des logements de séparateur de manière rotative autour d'un axe de rotation de séparateur (D) perpendiculaire à un axe de liaison (30, 50) entre les logements de séparateur,
**caractérisé en ce que**
un appareil de positionnement (25, 27, 45, 47) est agencé sur chacun des logements de séparateur, lequel est conçu pour transférer le séparateur de compartiment dans la deuxième position de séparateur au moyen d'une force de positionnement (P) et/ou pour maintenir le séparateur de compartiment dans la deuxième position de séparateur.

2. Compartiment de rangement selon la revendication 1, **caractérisé en ce que** l'appareil de positionnement présente un ressort (F25, F27, F45, F47) qui est précontraint de telle sorte qu'il peut transférer le séparateur de compartiment dans la deuxième position de séparateur au moyen d'une force de ressort (P) et/ou maintenir le séparateur de compartiment dans la deuxième position de séparateur.

3. Compartiment de rangement selon l'une quelconque des revendications précédentes, **caractérisé en ce que** le séparateur de compartiment présente latéralement des deux côtés de la zone centrale respectivement une zone de logement (32, 33, 52, 53), à l'extrémité longitudinale de laquelle le séparateur de compartiment est logé respectivement dans l'un des logements de séparateur.

4. Compartiment de rangement selon la revendication 3, **caractérisé en ce que** les zones de logement sont configurées sous forme macroscopiquement rigide.

5. Compartiment de rangement selon la revendication 3 ou 4, **caractérisé en ce q**u'un axe d'inflexion (34, 35, 54, 55) est prévu respectivement entre la zone centrale et chacune des zones de logement du séparateur de compartiment.

6. Compartiment de rangement selon la revendication 5, **caractérisé en ce qu'**une articulation tournante (36, 37, 56, 57) est agencée respectivement sur l'axe d'inflexion.

7. Compartiment de rangement selon la revendication 5 ou 6, **caractérisé en ce que,** par une déviation de la zone centrale autour des axes d'inflexion, le séparateur de compartiment peut être transféré de la deuxième position de séparateur à une troisième position de séparateur (23, 43), dans laquelle la zone centrale sépare le volume de rangement en un troisième compartiment partiel (19) et un quatrième compartiment partiel (13).

8. Compartiment de rangement selon l'une quelconque des revendications 5 à 7, **caractérisé en ce que,** par une déviation des zones de logement autour des axes d'inflexion, le séparateur de compartiment peut être transféré de la première position de séparateur à la troisième position de séparateur.

9. Compartiment de rangement selon l'une quelconque des revendications précédentes, **caractérisé en ce que** la partie (29, 49) de la paroi de rangement formée par le séparateur de compartiment présente une courbure au moins essentiellement constante, de telle sorte que cette partie de la paroi de rangement présente un rayon au moins essentiellement constant.

10. Compartiment de rangement selon l'une quelconque des revendications précédentes, **caractérisé en ce que** le compartiment de rangement présente, au-delà du séparateur de compartiment, une forme de base prismatique, notamment rectangulaire, et le séparateur de compartiment est agencé à un coin de la forme de base.

11. Compartiment de rangement selon l'une quelconque des revendications précédentes, **caractérisé en ce que** deux séparateurs de compartiment (20, 40) espacés l'un de l'autre sont prévus.

12. Compartiment de rangement selon la revendication 11, **caractérisé en ce que** les deux séparateurs de compartiment sont configurés avec une symétrie spéculaire par rapport à un axe longitudinal central (M) du compartiment de rangement.

13. Compartiment de rangement selon l'une quelconque des revendications précédentes, **caractérisé en ce que,** dans une zone dans laquelle le séparateur de compartiment (20, 40) présente le matériau macroscopiquement élastique, au moins une saillie est agencée sur un côté faisant face au récipient à maintenir.
